# EUROPEAN PATENT SPECIFICATION

(11) **EP 2 775 863 B1**
(45) Date of publication and mention of the grant of the patent: **28.06.2023**
(21) Application number: 12848116.5
(22) Date of filing: 09.11.2012
(51) Int. Cl.: A23L 29/281, A23L 27/00, A23L 29/256, A23L 2/56, A23L 2/52, A23L 2/38

(54) **MULTI-FLAVORED BEVERAGE**
GETRÄNK MIT MEHREREN AROMEN
BOISSON MULTI-AROMATISÉE

(30) Priority: 11.11.2011 US 201161558702 P
(43) Date of publication of application: 17.09.2014
(73) Proprietor: Hirschauer, Richard, Whiting, IA 51063-8801 (US)
(72) Inventor: MARTIN, Larry, D., Sioux City, IA 51106-9750 (US); HIRSCHAUER, Richard, Whiting, IA 51063-8801 (US)
(74) Representative: Hamer, Christopher K.
(86) International application number: PCT/US2012/064297
(87) International publication number: WO 2013/071011

(56) References cited:
- EP-A1- 0 453 397
- EP-A1- 1 297 755
- WO-A1-2008/089821
- WO-A1-2009/022909
- WO-A1-2009/029407
- WO-A1-2012/155809
- US-A- 5 004 595
- US-A- 5 456 937
- US-A- 5 792 502
- US-A- 6 106 883
- US-A1- 2004 028 622
- US-A1- 2006 249 167
- US-A1- 2008 193 616
- US-A1- 2009 162 483
- US-A1- 2009 196 972

## Description

### BACKGROUND

The present application relates to beverages and flavor additives for use in beverages. In particular, the present application relates to beverages having multiple flavors.

Using current beverage technology, beverages typically employ a blend of flavorings to achieve a homogeneous flavor profile. In such beverages a base is used to which flavorings, sweeteners, and other ingredients are added. The result is a consistent flavor profile for the entire beverage. This means the consumer detects the same flavorings in the same proportions throughout the process of drinking the beverage.

An example of such a beverage is a flavored soda. In sodas, carbonated water may serve as the beverage base to which a blend of flavorings, juices, sweeteners, preservatives, stabilizers, and other ingredients may be added. In a fruit flavored cola, multiple flavorings may be used to provide both a cola flavor and a fruit flavor (such as cherry or citrus). While providing multiple flavors, these flavors are blended and provide a homogeneous flavor profile to the beverage.

It is believed that the consumer experience of drinking a beverage could be enhanced or otherwise improved by providing a beverage having a flavor profile that varies as the beverage is consumed. Further, it would be beneficial to provide a beverage with which the consumer can affect the flavor profile without adding additional flavorings.

### SUMMARY

The present invention is set out in the appended claims.

A flavor additive in accordance with the present invention includes a flavor base selected from proteins, gelatin, pectin, alginate, gums, starches, modified starches, oils, food grade petrochemicals, and mixtures thereof. A flavor component is stably distributed in the base. Other embodiments relate to beverages including a beverage base selected from the group consisting of water, sodas, coffees, teas, dairy products, sports drinks, meal replacements, and mixtures thereof and a heterogenous flavor additive. The heterogenous flavor additive is a flavor additive as defined above, and a flavoring. The heterogenous flavor additive at least partially remains in a stable, separate phase from the beverage base. Yet other embodiments relate to a multi flavored beverage including a first phase including a first flavor profile and a second phase, distinct from the first phase. The second phase has a second flavor profile that is perceptably different from the second flavor profile,

### DETAILED DESCRIPTION

A multi-flavored beverage may generally have a water, juice, or dairy base to which other ingredients have been added. These ingredients may include preservatives, sweeteners, stabilizers, carbonation, or other ingredients. Optionally, the base may be flavored with one or more homogeneously blended flavorings. To this base formulation, one or more heterogeneous flavor additives may be added. It should be noted that the term "heterogenous" is not strictly being applied to the flavor additive itself (which may be homogenous) but rather is used to describe a flavor additive that, when added to a beverage, results in a beverage having a heterogenous flavor profile.

The heterogeneous flavor additives provide distinct flavor profiles that are physically separated from the base and from other heterogeneous flavor additives in the same beverage. A key to consumer acceptability of such a system is a consistent mouth feel across the beverage. This allows for a heterogeneous flavor profile while maintaining a consistent mouth feel for the consumer as the beverage is consumed.

Flavor separations and a comfortable mouth feel may be achieved by utilizing several ingredients and methods in the manufacturing process of creating the heterogeneous flavor additives. The heterogeneous flavor additives include, but are not limited to a flavor base ingredient such as a gelatin, a gum, and/or any of the following listed ingredients in various amounts and combinations, depending on the type of beverage base the heterogeneous flavor additives will be added into: proteins, gelatin, pectin, alginate, gums, starches, modified starches, oils, and/or food grade petrochemicals. The heterogeneous flavor additives is a liquid, semi-liquid, or a suspension.

The heterogeneous flavor additives may remain at least partially non-congenial with each other and with the beverage base solution by controlling the gel action to limit the gel to a stable viscous solution that has virtually the same texture as the base beverage. So close to the same texture of the base beverage that the burst of flavor will overwhelm any slight texture difference between the beverage base solution and the heterogeneous flavor additive.

Other techniques may be employed in the manufacturing of the heterogeneous flavor additives. For example, the stability of a flavor additive may be improved by micro-encapsulation of one or more of the ingredients. Also, various stabilizers, preservatives, and other ingredients may be used.

A specialized container or manufacturing process may also be utilized to assist the long term stability of the heterogeneous flavor additives.

The consumer will be able to adjust the distribution of the separate heterogeneous flavors additives by shaking the beverage container. If the beverage is shaken, stirred, or otherwise agitated a little, the flavor layers will still remain as separate flavors, and will be distributed throughout the beverage in relatively large globules. When drinking the beverage, the consumer will experience relatively large bursts of flavor, and greater variation from sip to sip. For example, separate large bursts of chocolate and separate large bursts of mint in cola. The heterogeneous flavor additives will form relatively large globules. Visually the beverage will look similar to a lava lamp with large globs of heterogeneous flavor additives distributed throughout in the beverage.

If the beverage is shaken, stirred, or otherwise agitated, to a greater degree, the heterogeneous flavor additives will still remain as separate flavors and will be distributed more uniformly in smaller globules throughout the beverage. The consumer will then experience smaller flavor bursts more often as the beverage is consumed, and therefore a more homogenous flavor profile. This allows the consumer to control the flavor conditions of his drink to his personal taste without the consumer adding any further ingredients.

The heterogeneous flavor additives may be pre-dispensed into a beverage by a bottler or other entity. Alternatively, the heterogeneous flavor additives may be integrated with the beverage base at the point of distribution, such as in a beverage fountain. In such cases, the consumer can select a base drink and a number of additional heterogeneous flavor additives that would be co-dispensed with the beverage base. Yet another use of the heterogeneous flavor additives is a flavor packet designed for either single or repeated use, from which a desired amount of a particular heterogeneous flavor additive can be added to a beverage base by the consumer. The heterogeneous flavor packets can also be packaged as an accessory to a beverage and attached to the beverage container.

In some examples, a homogeneous flavor additive was made having a composition of 0.5-1.0wt% high bloom gelatin in water. This additive was stable as a separate phase in water at ambient temperature down to about 4.4°C (40°F) More specific examples are provided below and are not meant to be limiting but rather, illustrative of the concepts disclosed herein.

### Example 1

A heterogenous flavor mixture was made by adding 15mL of HERSHEY'S light chocolate syrup to 15mL of a 1 wt% solution of sodium alginate in water. This was stirred well and brought to a boil. The mixture was removed from the heat and 2mL of 0.5 wt% calcium chloride (CaCl2) was added drop-wise to the mixture. The exact amount of CaCl2 added may be adjusted so the final mixture has a mouthfeel consistent with the beverage base to which it will be added. The mixture was then brought back to a boil, stirred briefly, packaged and cooled.

The resulting heterogenous flavor mixture was added to a diet cola and a low-fat milk and observed to maintain separate globules which varied in size. Upon drinking, the beverages were found to have a uniform mouthfeel and the flavor profile varied from sip to sip as various quantities of globules of varying sizes were consumed.

### Example 2

A low pH heterogenous flavor mixture was made using 15mL HERSHEY'S strawberry syrup in a mixture of 10mL 4 wt% low bloom gelatin. The mixture was stirred well and 5mL water was added drop-wise to adjust mouthfeel. The mixture was further stirred and packaged. It is believed that calcium cross-linking of alginate is inhibited by the low pH conditions of many fruit based flavorings.

### Example 3

A cherry, heterogenous flavor additive was made by putting maraschino cherries through a commercially available household juicer. The pulp was filtered and 15mL of the resulting liquid was added to 5mL water and 10mL of 4% low bloom gelatin. The mixture was stirred while cooling.

### Example 4

A lime flavored heterogenous flavor additive was made by adding 15 mL of lime juice (from thawed frozen limeade concentrate) and 15 mL of a 2% low bloom gelatin solution. The mixture was stirred while cooling.

### Example 5

An orange-vanilla flavor additive was made by combining 15 mL of CRUSH brand Orange & Vanilla Cream syrup and 15 mL of 1% sodium alginate. The mixture was brought to a boil in a microwave. 1.5 mL of 0.5% CaCl2 was added dropwise with vigorous stirring. The mixture was stirred while cooling.

### Example 6

A banana flavored additive was made by combining 15 mL of GERBER brand banana baby food and 15 mL of 1% sodium alginate.

The mixture was brought to a boil in a microwave. 2 mL of 0.5% CaCl₂ was added dropwise with vigorous stirring. The mixture was stirred while cooling.

### Example 7

A pear flavored additive was made by combining 15 mL of BEECHNUT pear baby food and 15 mL of 1% sodium alginate. The mixture was brought to a boil in a microwave. 2 mL of 0.5% CaCl2 was added dropwise with vigorous stirring. The mixture was stirred while cooling.

### Example 8

A peanut flavored additive was made by combining 7.5 mL of FAREWAY brand creamy peanut butter, 15 mL of water, and 15 mL of 1% sodium alginate. The mixture was brought to a boil in a microwave. 1 mL of 0.5% CaCl₂ was added dropwise with vigorous stirring. The mixture was stirred while cooling.

### Example 9

An almond flavored additive was made by combining 7.5 mL of SOLO brand almond paste, 15 mL of water, and 15 mL of 1% sodium alginate. The mixture was brought to a boil in a microwave. 1.5 mL of 0.5% CaCl₂ was added dropwise with vigorous stirring. The mixture was stirred while cooling.

### Example 10

A carrots flavored additive was made by combining 15 mL of BEECHNUT carrots baby food and 15 mL of 1% sodium alginate. The mixture was brought to a boil in a microwave. 2 mL of 0.5% CaCl2 was added dropwise with vigorous stirring. The mixture was stirred while cooling.

### Example 11

A green beans flavored additive was made by combining 15 mL of GERBER brand green beans baby food and 15 mL of 1% sodium alginate. The mixture was brought to a boil in a microwave. 2 mL of 0.5% CaCl₂ was added dropwise with vigorous stirring. The mixture was stirred while cooling.

### Example 12

A green peas flavored additive was made by combining 15 mL of BEECHNUT green peas baby food and 15 mL of 1% sodium alginate. The mixture was brought to a boil in a microwave. 2 mL of 0.5% CaCl2 was added dropwise with vigorous stirring. The mixture was stirred while cooling.

All of the above were found to be stable in chilled or room temperature beverages, and manu are stable at temperatures of up to about 60°C (140°F) Accordingly, a wide variety of food flavorings may be made to form heterogenous flavor additives having an acceptable mouthfeel. A variety of beverage applications can be envisioned including, vegetable or fruit drinks including individual vegetable and/or fruit phases in a beverage base such as juice.

Based on the forgoing examples and numerous other experiments, it was determined that a total concentration of 0.5-2 wt.% low bloom gelatin in the final heterogenous mixture would often result in a mouthfeel consistent with typical beverages at typical consumption temperatures. In particular, 1-1.4 wt.% concentrations produced favorable results. High bloom gelatin may also be used, albeit in lower concentrations. Typically, 0.5-1 wt.% high bloom gelatin resulted in satisfactory results, and particularly good results being found with concentrations between 0.6-0.8 wt.%. In particular, high bloom concentrations of 0.7 +/- 0.05 wt.% of high bloom gelatin were favored in many applications.

It was also found, that in flavor systems in which calcium cross-linking of alginate are not inhibited, a total concentration of 0.3-1.5 wt.% sodium alginate would result in a satisfactory mouthfeel and a stable, heterogenous flavor additive. In particular, concentrations of about 0.5-1 wt.% appeared to work well with concentrations of about 0.5 +/- 0.05 wt.% resulting in very favorable results. Calcium chloride was typically added in near stoichiometric quantities. Mouthfeel of the heterogenous flavor additive may be adjusted by adding an amount of CaCl₂ in less than a stoichiometric amount and then increasing the crosslinking of the alginate by increasing the amount of CaCl₂ added to an amount up to the stoichiometric amount.

Other additives may, on their own, or in combination with, but not limited to, gelatin, alginate, agar, or each other may provide an acceptable mouthfeel and a stable heterogenous flavor additive. For example, agar may be particularly well suited, especially for application where temperature stability is a requirement. Such applications may include hot beverages such as hot coffee or hot tea. Another promising additive is -polylysine which has been shown to be effective for mitigating of diffusion of a variety of color and flavor additives.

## Claims

1. A flavor additive comprising:
a flavor base selected from the group consisting of proteins, gelatin, pectin, alginate, gums, starches, modified starches, oils, food grade petrochemicals, and mixtures thereof; and
a flavor component that is stably distributed in the flavor base,
wherein the flavor additive is a liquid, semi-liquid, or a suspension; and
wherein, when added to a beverage selected from the group consisting of water, sodas, coffees, teas, dairy products, sports drinks, meal replacements, and mixtures thereof, the flavor additive is stable as a physically separate phase within the beverage.

2. The flavor additive of claim 1, wherein the flavor additive is a liquid or semi-liquid.

3. The flavor additive of claim 1, wherein the flavor base is selected from gelatin solutions, agar solutions, alginate solutions, and mixtures thereof.

4. The flavor additive of claim 1, wherein the flavor base includes polylysine.

5. The flavor additive of claim 1, wherein the flavor base comprises high bloom gelatin at a concentration of 0.5 to 1.0 wt.%, preferably a total concentration of 0.6 to 0.8 wt.%.

6. The flavor additive of claim 1, wherein the flavor base comprises low bloom gelatin at a total concentration of 0.5 to 2.0 wt.%, preferably a total concentration of 1.0 to 1.4 wt.%.

7. The flavor additive of claim 1, wherein the flavor base comprises sodium alginate at a total concentration of 0.3 to 1.5 wt.%, preferably a total concentration of 0.5 to 1.0 wt.%.

8. The flavor additive of claim 7, wherein the flavor additive comprises calcium chloride, preferably where calcium chloride is present in no more than a stoichiometric quantity relative to the amount of sodium alginate present.

9. A beverage comprising:
a beverage base selected from the group consisting of water, sodas, coffees, teas, dairy products, sports drinks, meal replacements, and mixtures thereof; and
a flavor additive as defined in any of Claims 1 to 8,
wherein the flavor additive at least partially remains in a stable, separate phase from the beverage base.

10. The beverage of claim 9, comprising a plurality of different flavor additives.

11. The beverage of claim 10 where the color of the flavor additives may each be different and distinctly separate colors.

12. The beverage of claim 9 wherein the beverage has a consistent mouthfeel.

13. The beverage of claim 9, wherein the flavor additive is configured to break apart within the beverage upon agitation and remain in a physically separate phase therefrom.

## Patentansprüche

1. Ein Aromazusatzstoff, umfassend:
eine Aromabasis, die aus der Gruppe ausgewählt ist,
die aus Proteinen, Gelatine, Pektin, Alginat, Gummis, Stärken, modifizierten Stärken, Ölen, lebensmitteltauglichen Petrochemikalien und Mischungen von diesen besteht; und
eine Aromakomponente, die in der Aromabasis stabil verteilt ist, wobei der Aromazusatzstoff eine Flüssigkeit, eine Halbflüssigkeit oder eine Suspension ist; und
wobei, wenn hinzugefügt zu einem Getränk, das aus der Gruppe ausgewählt ist, die aus Wasser, Limonaden, Kaffees, Tees, Milchprodukten, Sportgetränken, Ersatzmahlzeiten und Mischungen von diesen besteht, der Aromazusatzstoff in dem Getränk als physisch getrennte Phase stabil ist.

2. Der Aromazusatzstoff nach Anspruch 1, wobei der Aromazusatzstoff eine Flüssigkeit oder Halbflüssigkeit ist.

3. Der Aromazusatzstoff nach Anspruch 1, wobei die Aromabasis aus Gelatinelösungen, Agarlösungen, Alginatlösungen und Mischungen von diesen ausgewählt ist.

4. Der Aromazusatzstoff nach Anspruch 1, wobei die Aromabasis Polylysin einschließt.

5. Der Aromazusatzstoff nach Anspruch 1, wobei die Aromabasis hochbloomige Gelatine mit einer Konzentration von 0,5 bis 1,0 Gew.-%, bevorzugt einer Gesamtkonzentration von 0,6 bis 0,8 Gew.-%, umfasst.

6. Der Aromazusatzstoff nach Anspruch 1, wobei die Aromabasis niedrigbloomige Gelatine mit einer Konzentration von 0,5 bis 2,0 Gew.-%, bevorzugt einer Gesamtkonzentration von 1,0 bis 1,4 Gew.-%, umfasst.

7. Der Aromazusatzstoff nach Anspruch 1, wobei die Aromabasis Natriumalginat mit einer Konzentration von 0,3 bis 1,5 Gew.-%, bevorzugt einer Gesamtkonzentration von 0,5 bis 1,0 Gew.-%, umfasst.

8. Der Aromazusatzstoff nach Anspruch 7, wobei der Aromazusatzstoff Calciumchlorid umfasst, wobei bevorzugt Calciumchlorid in nicht mehr als einer stöchiometrischen Quantität relativ zu der Menge an vorliegendem Natriumalginat vorliegt.

9. Ein Getränk, umfassend:
eine Getränkebasis, die aus der Gruppe ausgewählt ist, die aus, Wasser, Limonaden, Kaffees, Tees, Milchprodukten, Sportgetränken, Ersatzmahlzeiten und Mischungen von diesen besteht; und
ein Aromazusatzstoff wie in einem der Ansprüche 1 bis 8 definiert,
wobei der Aromazusatzstoff mindestens teilweise in einer stabilen, getrennten Phase von der Getränkebasis bleibt.

10. Das Getränk nach Anspruch 9, umfassend eine Vielzahl von verschiedenen Aromazusatzstoffen.

11. Das Getränk nach Anspruch 10, wobei die Farbe der Aromazusatzstoffe jeweils verschiedene und deutlich getrennte Farben sein können.

12. Das Getränk nach Anspruch 9, wobei das Getränk ein gleichbleibendes Mundgefühl aufweist.

13. Das Getränk nach Anspruch 9, wobei der Aromazusatzstoff dazu konfiguriert ist, in dem Getränk beim Umrühren zu zerbrechen und in einer physisch getrennten Phase von diesem zu bleiben.

## Revendications

1. Additif d'arôme comprenant :
une base d'arôme sélectionnée à partir du groupe consistant en protéines, gélatine, pectine, alginate, gommes, amidons, amidons modifiés, huiles, produits pétrochimiques de qualité alimentaire, et mélanges de ceux-ci/celles-ci ; et
un composant d'arôme qui est distribué de manière stable dans la base d'arôme,
l'additif d'arôme étant un liquide, un semi-liquide, ou une suspension ; et
lorsqu'il est ajouté à une boisson sélectionnée à partir du groupe consistant en eau, sodas, cafés, thés, produits laitiers, boissons pour sportifs, substituts de repas, et mélanges de ceux-ci/celles-ci, l'additif d'arôme est stable en tant que phase séparée physiquement au sein de la boisson.

2. Additif d'arôme de la revendication 1, l'additif d'arôme étant un liquide ou un semi-liquide.

3. Additif d'arôme de la revendication 1, dans lequel la base d'arôme est sélectionnée à partir de solutions de gélatine, solutions d'agar, solutions d'alginate, et mélanges de celles-ci.

4. Additif d'arôme de la revendication 1, dans lequel la base d'arôme inclut de la polylysine.

5. Additif d'arôme de la revendication 1, dans lequel la base d'arôme comprend de la gélatine à force de gel élevée à une concentration de 0,5 à 1,0 % en poids, de préférence une concentration totale de 0,6 à 0,8 % en poids.

6. Additif d'arôme de la revendication 1, dans lequel la base d'arôme comprend de la gélatine à faible force de gel à une concentration totale de 0,5 à 2,0 % en poids, de préférence une concentration totale de 1,0 à 1,4 % en poids.

7. Additif d'arôme de la revendication 1, dans lequel la base d'arôme comprend de l'alginate de sodium à une concentration totale de 0,3 à 1,5 % en poids, de préférence une concentration totale de 0,5 à 1,0 % en poids.

8. Additif d'arôme de la revendication 7, l'additif d'arôme comprenant du chlorure de calcium, de préférence où le chlorure de calcium est présent dans pas plus qu'une quantité stœchiométrique relativement au volume d'alginate de sodium présent.

9. Boisson comprenant :
une base de boisson sélectionnée à partir du groupe consistant en eau, sodas, cafés, thés, produits laitiers, boissons pour sportifs, substituts de repas, et mélanges de ceux-ci/celles-ci ; et
un additif d'arôme tel que défini dans n'importe lesquelles des revendications 1 à 8,
dans laquelle l'additif d'arôme reste au moins partiellement dans une phase stable, séparée par rapport à la base de boisson.

10. Boisson de la revendication 9, comprenant une pluralité de différents additifs d'arôme.

11. Boisson de la revendication 10 où la couleur des additifs d'arôme peut chacune être des couleurs différentes et distinctement séparées.

12. Boisson de la revendication 9, la boisson ayant une sensation en bouche uniforme.

13. Boisson de la revendication 9, dans laquelle l'additif d'arôme est configuré pour se fractionner au sein de la boisson lors de son agitation et rester dans une phase séparée physiquement à partir de ce moment-là.
